# EUROPÄISCHE PATENTSCHRIFT

(11) **EP 1 420 039 B1**
(45) Veröffentlichungstag und Bekanntmachung des Hinweises auf die Patenterteilung: **28.03.2007**
(21) Anmeldenummer: 02025250.8
(22) Anmeldetag: 12.11.2002
(51) Int. Cl.: C08J 5/22, B01D 71/82, B01D 71/72, B01D 71/68, H01M 8/10

(54) **Protonenleitfähige Membran für elektrochemische Anwendungen**
Proton-conducting membrane for electrochemical use
Membrane conductrice de protons pour applications electrochimiques

(43) Veröffentlichungstag der Anmeldung: 19.05.2004
(73) Patentinhaber: GKSS-Forschungszentrum Geesthacht GmbH, 21502 Geesthacht (DE)
(72) Erfinder: Jakoby, Kai, 40237 Düsseldorf (DE); Pereira Nunes, Suzana, 21502 Geesthacht (DE); Peinemann, Klaus-Victor, 21502 Geesthacht (DE)
(74) Vertreter: Seemann, Ralph

(56) Entgegenhaltungen:
- DE-A- 19 909 028
- US-A- 4 008 191

## Beschreibung

Die Erfindung betrifft eine protonenleitfähige Membran für elektrochemische Anwendungen, ein Polymer zur Herstellung dieser Membran und die Verwendung dieser Membran in einer Brennstoffzelle.

Brennstoffzellen gelten als zukunftsweisende emissionsarme Alternative zu konventionellen Energiegewinnungsverfahren. Für mobile Anwendungen ist die Polymerelektrolyt-Membran-Brennstoffzelle (PEM) von besonderem Interesse. Eine protonenleitende Polymermembran ist die zentrale Komponente in diesem Brennstoffzellentyp. Nafion^{®}, bei dem es sich um ein von DuPont hergestelltes perfluoriertes Polymer mit Sulfonsäure-Seitengruppen handelt, und ähnliche Produkte von Asahi sind noch immer die marktbeherrschenden Membranmaterialien für diesen Anwendungszweck.

Es gibt zahlreiche Untersuchungen zur Verwendung anderer Polymere als Membranmaterialien in Brennstoffzellen. Bei diesen Polymeren handelt es sich allerdings fast ausschließlich um sulfonierte Materialien, deren Protonenleitfähigkeit auf Sulfonsäure-Gruppen zurückzuführen ist.

In der DE-A-199 09 028 sind sulfonierte aromatische Polymere beschrieben, deren Protonenleitfähigkeit durch Sulfonsäure-Gruppen verursacht wird. Die aromatischen Reste der Polymere können mit inerten Gruppen substituiert sein. Als Beispiele für Substituenten sind neben Alkyl-, Alkoxy-, Aryl-, Amino-, Alkohol-, Ether-, Sulfonyl-, Acyl-, Nitro-, Carbonsäure-, Carbonsäureester oder Carbonsäureamidgruppen oder Halogen auch Phosphonylgruppen angegeben. Aus den Polymeren lassen sich Membranen für den Einsatz in Brennstoffzellen herstellen.

In einer Veröffentlichung (M. Yamabe, K. Akiyama, Y. Akatsuka, M. Kato. Novel phosphonated perfluorocarbon polymers. Eur. Polym. J. 36 (2000) 1035-41) wird die Synthese von perfluorierten Polymeren mit Phosphonsäure-Seitengruppen, ausgehend von perfluorovinyloxysubstituierten Phosphonsäuren als Monomere, beschrieben, die dann mit Tetrafluoroethylen und Perfluoropropylvinylether copolymerisiert werden. Die Verwendung derartiger Polymere in Brennstoffzellen ist in der US-A 6 087 032 beschrieben.

Weitere Brennstoffzellenmembranen aus Polymeren mit Phosphonsäure-Seitengruppen sind beispielsweise in der US-A 5 422 411 beschrieben. Diese bekannten Polymere werden durch radikalische Homo- und Copolymerisation von α,β,β-Trifluorstyrol-4-phosphonsäureestern und anschließende Esterhydrolyse hergestellt. Bei dem erhaltenen Produkt handelt es sich um ein Polystyrol mit perfluorierter Hauptkette, das an den Phenylringen mit Phosphonsäure-Gruppen funktionalisiert ist.

Weitere Polymere zur Anwendung in Brennstoffzellen sind in der US-A 5 679 482 beschrieben. Es handelt sich dabei um fluorfreie StyrolCopolymere mit einer gemischten Funktionalisierung aus Sulfonsäure- und Phosphonsäure-Gruppen. Dort sind primär SEBS-Copolymere beschrieben, deren Styrol-Einheiten durch Umsetzung mit ClCH₂PO(OR)₂ phosphoniert werden können, In dem Produkt sind die Phosphonsäure-Gruppen dann nicht unmittelbar, sondern über eine Methylen-Einheit an die aromatischen Ringe gebunden.

Auch die US-A 4 605 685 befasst sich mit der Phosphonierung von Vinylpolymeren, die jedoch zur Entwicklung von KationenaustauscherMembranen verwendet werden. Die Phosphonierung von Polybenzimidazol ist in der US-A 5 599 639 beschrieben; dabei wird Lithiumhydrid mit BrCF₂PO(OR)₂ umgesetzt. Bei dem erhaltenen Produkt sind die Phosphonsäure-Gruppen kovalent über CF₂-Einheiten an Stickstoffatome der Imidazolringe gebunden.

Die ersten Untersuchungen zur Verwendung phosphonierter Polymere in Brennstoffzellen wurden von Cabasso (X. Xu, I. Cabasso. Preliminary Study of Phosphonate Ion Exchange Membranes for PEM Fuel Cells. Polym. Mat. Sei. Eng. 68 (1993) 120-1) veröffentlicht. Zur Membranherstellung wurde dabei ein phosphoniertes Polyphenylenoxid sowie daraus erzeugte Polymerblends eingesetzt. Auch bei diesem Polymer, dessen Synthese in der US-A 4 073 754 beschrieben ist, sind die Phosphonsäure-Gruppen durch Methyleneinheiten von den aromatischen Ringen der Polymerhauptkette getrennt. Diese Alkylen-Spacer setzen die chemische Stabilität der Materialien gegenüber Oxidationsmitteln herab und beeinträchtigen somit die Langzeitstabilität der Membranen im Brennstoffzellenbetrieb.

Ein wesentlicher Nachteil der eingangs genannten, perfluorierten Materialien, wie z. B. Nafion® ist der hohe Preis dieser Materialien. Durch die Verwendung fluorfreier aromatischer Polymere könnte es vielleicht möglich sein, die Materialkosten abzusenken, ohne die chemische Stabilität zu beeinträchtigen. In der Literatur finden sich deshalb zahlreiche Untersuchungen zur Sulfonierung von Polysulfonen, Polyetherketonen, Polyetheretherketonen, Polyamiden und Polyphosphazenen. Alle diese Materialien besitzen allerdings zahlreiche Nachteile.

Aufgabe der vorliegende Erfindung ist es, ein Arylpolymer mit Phosphonsäure-Seitengruppen bereitzustellen, das zur Herstellung verbesserter, protonenleitfähiger Membranen eingesetzt werden kann.

Aufgabe der Erfindung ist ferner, die Bereitstellung einer entsprechenden

Membran.

Gelöst werden diese Aufgaben durch die Lehren der Ansprüche.

Bei der erfindungsgemäßen Membran kommt ein Polymer auf Basis eines aromatische Ringe aufweisenden Basispolymers zum Einsatz, bei dem es sich jedoch nicht um ein Vinylpolymer handelt. Dieses Polymer, das auch als Arylpolymer bezeichnet werden kann, wird phosphoniert, und zwar derart, dass die Phosphonsäure-Gruppen kovalent direkt an die aromatischen Ringe des Basispolymers gebunden sind. Mit anderen Worten, es existieren keine Spacer-Gruppen, wie das bei den bisher bekannten phosphonierten Membranen bzw. Polymeren der Fall war.

Das Phosphonsäure-Gruppen aufweisende Polymer kann vorzugsweise zusätzliche Sulfonsäure-Gruppen aufweisen bzw. dadurch modifiziert sein.

Bei dem Basispolymer handelt es sich vorzugsweise um ein Polymer aus der Klasse der Polysulfone, der Polyethersulfone, der Polyetherketone, der Polyetheretherketonen, der Polyarylenoxide, der Polyarylensulfide, der Polyimide, der Polybenzimidazole, der Polyoxadiazole, der Polytriazole und der Polyphosphazene.

Es sind zwar schon Verfahren zur direkten Phosphonierung aromatischer Ringe bekannt, die sich jedoch bei einer polymeranalogen Ausführung als unzweckmäßig erwiesen. Beispielsweise stellt die Friedel-Crafts-Reaktion mit PCl₃ und AlCl₃ den einfachsten und kostengünstigsten Weg zur direkten aromatischen Phosphonierung dar. Es ist jedoch bekannt (M. Hartmann, U. Ch. Hipler, H. Carlsohn. Synthese von Styrencopolymeren ungesättigter Phosphonsäuren. Acta Polymerica 31 (1980) 165-8), dass diese Reaktion am Polymer aufgrund der Trifunktionalität von PCl₃ fast ausschließlich zu vernetzen Produkten führt.

Zur Herstellung des erfindungsgemäßen Polymers und der erfindungsgemäßen Membran wurde ein dreistufiges Verfahren zur Phosphonierung entwickelt. Bei diesem Verfahren wird das Basispolymer in der Stufe a) bromiert oder iodiert. In der Stufe b) wird das erhaltene, bromierte oder iodierte Polymer mit einem oder mehreren Phosphonsäureester(n) und/oder einem oder mehreren Phosphorigsäureestern(n) in Anwesenheit eines Übergangsmetallkatalysators umgesetzt. Die resultierenden polymeren Arylphosphonsäureester werden dann in der Stufe c) zur freien Phosphonsäure hydrolysiert. Die so erhaltenen Produkte sind löslich in vielen polaren organischen Lösemitteln, aber unlöslich in Methanol und Wasser. Die Produkte lassen sich aus der Lösung zu mechanisch und thermisch stabilen Filmen verarbeiten, die als Membranen Anwendung finden können.

Zudem hat es sich als vorteilhaft erwiesen, bei der beschriebenen Umsetzung ein Lösemittel einzusetzen.

Durch den Einsatz der erfindungsgemäßen phosphonierten Polymere kann die thermische Stabilität der daraus erhaltenen BrennstoffzellenMembranen verbessert werden, so dass die Betriebstemperatur von PEM-Brennstoffzellen erhöht werden kann.

Die Erfindung wird im folgenden anhand der bevorzugte Ausführungsformen beschreibenden Beispiele näher erläutert.

### Beispiel 1

### Bromierung von Radel Polysulfon

Die Bromierung erfolgte nach dem in der US-A 4 999 415 beschriebenen Verfahren. Der Bromanteil im bromierten Polymer wurde durch

Elementaranalyse bestimmt. Die Zusammensetzung des Produktes entsprach der Summenformel C₂₄H₁₄SO₄Br₂ . Der Substitutionsgrad betrug 200 % (pro Repetiereinheit des Polymeren).

### Beispiel 2

### Phosphonierung des dibromierten Radel Polysulfons (RBr) aus Beispiel 1

Eine Lösung von 10,0 g RBr in einer Mischung aus 50 ml 1,2-Dichlorbenzol, 20 ml Diethylphosphit und 5 ml Triethylamin wurde unter Argon-Atmosphäre zu einer auf 90 °C erhitzten Lösung von 0,3 g Pd(PPh₃)₄ in einer Mischung aus 50 ml 1,2-Dichlorbenzol, 20 ml Diethylphosphit und 5 ml Triethylamin getropft. Die Reaktionsmischung wurde dann 96 h lang unter Lichtausschluss auf 130 °C erhitzt. Im Laufe dieser Zeit wurden weitere 0,3 g Pd(PPh₃)₄, 40 ml Diethylphosphit und 10 ml Triethylamin sukzessive zugegeben. Nach 96 h wurde das Polymer in Methanol ausgefällt, in Chloroform aufgenommen und in Methanol erneut ausgefällt. Nach Trocknung im Vakuum wurden 8,0 g Produkt erhalten. Der Gehalt an Phosphonsäureester-Gruppen wurde durch ¹H-NMR-Spektroskopie und Elementaranalyse bestimmt. Es ergab sich übereinstimmend ein Substitutionsgrad von 58 % pro Repetiereinheit des Polymeren.

### Beispiel 3

### Phosphonierung des dibromierten Radel Polysulfons (RBr) aus Beispiel 1

Der Reaktionsansatz aus Beispiel 2 wurde wiederholt. Anstelle des Pd(PPh₃)₄ wurden 0,3 g Pd₂(dba)₃ CHCl₃ (dba = Dibenzylidenaceton) als Katalysator eingesetzt. Die Reaktionsmischung wurde 96 h lang auf 120 °C erhitzt. Im Laufe dieser Zeit wurde weitere 0,2 g Katalysator, 70 ml Diethylphosphit und 10 ml Triethylamin sukzessive zugegeben. Es wurden 8,5 g Produkt erhalten. Durch ¹H-NMR-Spektroskopie und Elementaranalyse wurde bestimmt, dass der Substitutionsgrad an Phosphonsäureester-Gruppen im Produkt 77 % pro Repetiereinheit des Polymeren betrug.

### Beispiel 4

### Phosphonierung des dibromierten Radel Polysulfons (RBr) aus Beispiel 1

Eine Lösung von 10,0 g RBr und 0,3 g PD₂(dba)₃ CHCl₃ in einer Mischung aus 30 ml Diphenylether, 60 ml Diethylphosphit und 5 ml Triethylamin wurde unter Argon-Atmosphäre zunächst 1 h lang auf 90 °C, dann 96 h lang auf 120 °C erhitzt. Im Laufe dieser Zeit wurden weitere 0,2 g Katalysator, 40 ml Diethylphosphit und 15 ml Triethylamin sukzessive zugegeben. Nach 96 h wurde das Polymer in Methanol ausgefällt, in Chloroform aufgenommen und in Methanol erneut ausgefällt. Nach Trocknung im Vakuum wurden 9,5 g Produkt erhalten. Der Gehalt an Phosphonsäureester-Gruppen wurde durch ¹H-NMR-Spektroskopie und Elementaranalyse bestimmt. Es ergab sich übereinstimmend ein Substitutionsgrad von 88 % pro Repetiereinheit des Polymeren.,

### Beispiel 5

### Hydrolyse der polymeren Phosphonsäureester aus den Beispielen 2 - 4

Das phosphonierte RBr aus den Beispielen 2 - 4 wurde in 48 %iger Bromwasserstoffsäure suspendiert und 24 h lang unter Rückfluss erhitzt. Anschließend wurde das Polymer abfiltriert und gründlich mit Wasser gewaschen. Durch ¹H-NMR-Spektroskopie ließen sich in dem Produkt keine intakten Phosphonsäureester-Gruppen mehr nachweisen. Bei dem hydrolysierten Produkt aus Beispiel 4 entsprach der Gehalt an freien Phosphonsäuren somit einer Ionenaustauscherkapazität von 1,6 mmol/g. Die getrockneten Produkte waren nach Zugabe von 5 % konzentrischer Salzsäure leicht löslich in Dimethylacetamid. Aus diesen Lösungen konnten mechanisch und thermisch stabile Polymerfilme hergestellt werden.

## Patentansprüche

1. Protonenleitfähige Membran für elektrochemische Anwendungen, insbesondere für Brennstoffzellen, aus einem Polymer auf Basis eines aromatische Ringe aufweisenden Basispolymers, bei dem es sich nicht um ein Vinylpolymer handelt, **dadurch gekennzeichnet, dass** das Polymer Phosphonsäure-Gruppen aufweist, die kovalent direkt und somit ohne eine Spacer-Gruppe an die aromatischen Ringe des Basispolymers gebunden sind.

2. Membran nach Anspruch 1, **dadurch gekennzeichnet, dass** zusätzlich Sulfonsäure-Gruppen an das Polymer gebunden sind.

3. Membran nach Anspruch 1 oder 2, **dadurch gekennzeichnet, dass** es sich bei dem Basispolymer um ein Polymer aus der Klasse der Polysulfone, der Polyethersulfone, der Polyetherketone, der Polyetheretherketonen, der Polyarylenoxide, der Polyarylensulfide, der Polyimide, der Polybenzimidazole, der Polyoxadiazole, der Polytriazole und der Polyphosphazene handelt.

4. Membran nach einem der vorhergehenden Ansprüche, **dadurch gekennzeichnet, dass** das Polymer erhältlich ist, indem folgende Verfahrensschritte durchgeführt werden:
a) das Basispolymer wird bromiert oder iodiert,
b) das in Stufe a) erhaltene bromierte oder iodierte Polymer wird mit Phosphonsäureestern und/oder Phosphorigsäureestern in Anwesenheit eines Übergangsmetallkatalysators umgesetzt,
c) das in Stufe b) erhaltene Polymer wird hydrolysiert, und
d) aus dem in Stufe c) erhaltenen Polymer wird auf per se bekannte Weise eine Membran in Form eines Polymerfilmes hergestellt.

5. Membran nach Anspruch 4, **dadurch gekennzeichnet, dass** die Verfahrensschritte a), b) und c) in einem Lösungsmittel durchgeführt werden.

6. Polymer auf Basis eines aromatische Ringe aufweisenden Basispolymers, bei dem es sich nicht um ein Vinylpolymer handelt, **dadurch gekennzeichnet, dass** das Polymer Phosphonsäure-Gruppen aufweist, die kovalent direkt und somit ohne eine Spacer-Gruppe an die aromatischen Ringe des Basispolymers gebunden sind.

7. Polymer nach Anspruch 6, **dadurch gekennzeichnet, dass** das Polymer die in den Ansprüchen 2 und 3 beschriebenen Eigenschaften besitzt und/oder nach den in den Ansprüchen 4 bis 5 beschriebenen Verfahrensschritten erhältlich ist.

8. Verwendung einer Membran nach einem der Ansprüche 1 bis 5 in einer Brennstoffzelle.

9. Verfahren zur Herstellung eines Polymers nach Anspruch 7 oder 8, **dadurch gekennzeichnet, dass** die in den Ansprüchen 4 bis 5 beschriebenen Verfahrensschritte durchgeführt werden.

## Claims

1. Membrane capable of conducting protons for electrochemical applications, in particular for fuel cells, made from a polymer based on a base polymer containing an aromatic ring, which is not a vinyl polymer, **characterised in that** the polymer contains phosphonic acid groups which are covalently bonded to the aromatic rings of the base polymer directly and hence without a spacer group.

2. Membrane as claimed in claim 1, **characterised in that** sulphonic acid groups are additionally bonded to the polymer.

3. Membrane as claimed in claim 1 or 2, **characterised in that** the base polymer is a polymer from the class of polysulphones, polyether sulphones, polyether ketones, polyetherether ketones, polyarylene oxides, polyarylene sulphides, polyimides, polybenzimidazoles, polyoxydiazoles, polytriazoles and polyphosphazenes.

4. Membrane as claimed in one of the preceding claims, **characterised in that** the polymer can be obtained by means of the following method steps:
a) the base polymer is bromated or iodised,
b) the bromated or iodised polymer obtained from step a) is reacted with phosphonic acid esters and/or phosphoric acid esters in the presence of a transition metal catalyst,
c) the polymer obtained from step b) is hydrolysed and
d) a membrane in the form of a polymer film is produced in a manner known per se from the polymer obtained from step c).

5. Membrane as claimed in claim 4, **characterised in that** method steps a), b) and c) take place in a solvent.

6. Polymer based on a base polymer containing an aromatic ring, which is not a vinyl polymer, **characterised in that** the polymer contains phosphonic acid groups which are covalently bonded to the aromatic rings of the base polymer directly and hence without a spacer group.

7. Polymer as claimed in claim 6, **characterised in that** the polymer has the properties described in claims 2 and 3 and/or can be obtained on the basis of the method steps described in claims 4 and 5.

8. Use of a membrane as claimed in one of claims 1 to 5 in a fuel cell.

9. Method of producing a polymer as claimed in claim 7 or 8, **characterised in that** the method steps described in claims 4 to 5 are performed.

## Revendications

1. Membrane conductrice de protons pour utilisations électrochimiques, en particulier pour des cellules à combustible, constituée d'un polymère à base d'un polymère de base présentant un cycle aromatique pour lequel il ne s'agit pas d'un polymère vinylique, **caractérisée en ce que** le polymère présente des groupements acide phosphonique qui sont liés directement de façon covalente et ainsi sans groupement espaceur sur les cycles aromatiques du polymère de base.

2. Membrane selon la revendication 1 **caractérisée en ce qu'**en plus des groupements acide sulfonique sont liés au polymère.

3. Membrane selon la revendication 1 ou 2 **caractérisée en ce que** pour le polymère de base, il s'agit d'un polymère de la classe des polysulfones, des polyéthersulfones, des polyéthercétones, des polyétheréthercétones, des oxydes de polyphénylène, des polyphénylène sulfures, des polyimides, des polybenzimidazoles, des polyoxadiazoles, des polytriazoles et des polyphosphazènes.

4. Membrane selon l'une quelconque des revendications précédentes **caractérisée en ce qu'**on peut obtenir le polymère en réalisant les étapes de procédé suivantes :
a) le polymère de base est bromé ou iodé,
b) le polymère bromé ou iodé obtenu à l'étape a) est mis à réagir avec des esters d'acide phosphonique et/ou des esters d'acide phosphorique en présence d'un catalyseur métal de transition.
c) le polymère obtenu à l'étape b) est hydrolysé, et
d) à partir du polymère obtenu à l'étape c) est fabriquée une membrane sous la forme d'un film de polymère d'une manière connue per se.

5. Membrane selon la revendication 4 **caractérisée en ce que** les étapes de procédé a), b) et c) sont réalisées dans un solvant.

6. Polymère à base d'un polymère de base présentant des cycles aromatiques, dans lequel il ne s'agit pas d'un polymère vinylique, **caractérisé en ce que** le polymère présente des groupements acide phosphonique qui sont liés directement de façon covalente et ainsi sans groupement espaceur sur les cycles aromatiques du polymère de base.

7. Polymère selon la revendication 6 **caractérisé en ce que** le polymère possède les propriétés décrites dans les revendications 2 et 3 et/ou peut être obtenu selon les étapes de procédé décrites dans les revendications 4 à 5.

8. Utilisation d'une membrane selon l'une quelconque des revendications 1 à 5 dans une cellule à combustible.

9. Procédé de fabrication d'un polymère selon la revendication 7 ou 8 **caractérisé en ce que** sont réalisées les étapes de procédé décrites dans les revendications 4 à 5.
